# EUROPEAN PATENT APPLICATION

(11) **EP 4 560 299 A1**
(43) Date of publication of application: **28.05.2025**
(21) Application number: 24214679.3
(22) Date of filing: 22.11.2024
(51) Int. Cl.: G01N 23/04, G01N 23/18

(54) **X-RAY INSPECTION APPARATUS**

(30) Priority: 27.11.2023 JP 2023199980
(71) Applicant: Ishida Co., Ltd., Kyoto-shi Kyoto 606-8392 (JP)
(72) Inventor: YURUGI, Futoshi, Ritto-shi, Shiga, 520-3026 (JP); HIROSE, Osamu, Ritto-shi, Shiga, 520-3026 (JP); TOMINAGA, Kota, Ritto-shi, Shiga, 520-3026 (JP)
(74) Representative: Global IP Europe Patentanwaltskanzlei

(57) **Abstract**

An X-ray inspection apparatus (1) includes: a conveying unit (5) configured to convey an article (G) along a transport direction; an irradiation unit (6) configured to irradiate the article (G) conveyed by the conveying unit (5) with X-rays; a sensor unit (7) configured to detect the X-rays and including detection elements (10) arranged in a planar configuration; an image generation unit (22) configured to generate an image based on a detection result output from the sensor unit (7); and an inspection unit (23) configured to inspect the article (G) based on the image. The detection elements (10) include: first detection elements (11) arranged in a first column in a crossing direction intersecting the transport direction; and second detection elements (12) arranged in a second column parallel to the first column. The number of the second detection elements (12) arranged in the second column is greater than the number of the first detection elements (11) arranged in the first column.

## Description

### Technical Field

The present invention relates to an X-ray inspection apparatus.

### Background Art

In the related art, an inspection apparatus using electromagnetic waves such as X-rays has been used as an apparatus for inspecting an object to be inspected (articles) such as foods and pharmaceutical products. For example, a nondestructive inspection apparatus disclosed in Patent Document 1 includes: an electromagnetic wave irradiating means for irradiating an object to be inspected with a predetermined electromagnetic wave; a conveying means for conveying the object to be inspected mounted on a conveying surface in the Y-axis direction; an electromagnetic wave detection means in which a detection element group composed of M detection elements arranged in the Y-axis direction is arranged in N rows in the X-axis direction; and M×N wiring lines for electrically connecting each of the M×N detection elements to a predetermined connection destination located outside of one end of the electromagnetic wave detection means in the Y-axis direction.

### Citation List

### Patent Literature

Patent Document 1: JP 6454820 B

### Summary of Invention

### Technical Problem

In the nondestructive inspection apparatus disclosed in Patent Document 1, a detection element group arranged in a lattice pattern is used as electromagnetic wave detection means. In a case where such electromagnetic wave detection means are used, once a foreign matter passes between adjacent detection elements in the X-axis direction, the foreign matter may not be detected by every detection element, and detection of the foreign matter may be omitted. In order to prevent such detection omission, for example, the integration degree of the detection elements in the detection element group may be increased. However, by simply increasing the integration degree of the detection elements, the manufacturing cost in the electromagnetic wave detection means may be excessively increased.

An object of one aspect of the present invention is to provide an X-ray inspection apparatus capable of preventing detection of a foreign matter from being omitted while reducing an increase in manufacturing cost.

### Solution to Problem

(1) An X-ray inspection apparatus according to one aspect of the present invention, includes:
   a conveying unit configured to convey an article along a transport direction;
   an irradiation unit configured to irradiate the article conveyed by the conveying unit with X-rays;
   a sensor unit configured to detect the X-rays and including detection elements arranged in a planar configuration;
   an image generation unit configured to generate an image based on a detection result output from the sensor unit; and
   an inspection unit configured to inspect the article based on the image, where
   the detection elements include:
      first detection elements arranged in a first column in a crossing direction intersecting the transport direction; and
      second detection elements arranged in a second column parallel to the first column, and
      the number of the second detection elements arranged in the second column is greater than the number of the first detection elements arranged in the first column.
   According to this X-ray inspection apparatus, the detection elements included in the sensor unit include: first detection elements arranged in a first column in a crossing direction intersecting the transport direction; and second detection elements arranged in a second column parallel to the first column. The number of the second detection elements arranged in the second column is greater than the number of the first detection elements arranged in the first column. Thus, the second detection element is smaller than the first detection element, and a foreign matter passing through the sensor unit is likely to be detected by the second detection elements in the second column. Accordingly, a foreign matter detection is less likely to be omitted. In addition, since the sensor unit includes both the first detection elements and the second detection elements, an increase in the manufacturing cost of the sensor unit can be reduced as compared with the case where the sensor unit includes only the second detection elements.
(2) In the X-ray inspection apparatus according to the above (1),
   the image may include a first pixel and a second pixel, and the image generation unit may generate a first pixel using a detection result of one of the first detection element and generate the second pixel using detection results of a plurality of second detection elements in the second detection elements. In this case, the contrast of the image generated by the image generation unit can be improved.
(3) In the X-ray inspection apparatus according to the above (1),
   the image may include a first image including a first pixel generated using the detection result of one of the first detection elements and a second image including a second pixel generated using the detection results of a plurality of second detection elements in the second detection elements. In this case, the difference between the brightness, contrast, and the like of the first image and those of the second image can be decreased.
(4) In the X-ray inspection apparatus according to the above (2) or (3),
   when two adjacent detection elements among the first detection elements arranged in the first column are respectively a third detection element and a fourth detection element,
   a part of the plurality of the second detection elements used for generating the second pixel may be arranged in the transport direction with respect to the third detection element, and
   another part of the plurality of the second detection elements used for generating the second pixel may be arranged in the transport direction with respect to the fourth detection element. In this case, the foreign matter that has passed between the third detection element and the fourth detection element is more likely to be displayed in the second pixel generated using the detection results of the second detection elements. Thus, a foreign matter detection is less likely to be omitted.
(5) In the X-ray inspection apparatus according to any one of the above (1) to (4),
   a dimension of the first detection element in the transport direction may be the same as a dimension of the second detection element in the transport direction, and
   a dimension of the first detection element in the crossing direction may be a natural number multiple of 2 or more of a dimension of the second detection element in the crossing direction. In this case, a foreign matter detection is more less likely to be omitted.
(6) In the X-ray inspection apparatus according to any one of the above (1) to (5),
   the first column and the second column may be alternately provided with multiple rows each along the transport direction. In this case, a foreign matter detection is more less likely to be omitted.
(7) An X-ray inspection apparatus according to another aspect of the present invention, includes:
   a conveying unit configured to convey an article along a transport direction;
   an irradiation unit configured to irradiate the article conveyed by the conveying unit with X-rays;
   a sensor unit configured to detect the X-rays and including detection elements arranged in a planar configuration;
   an image generation unit configured to generate an image based on a detection result output from the sensor unit; and
   an inspection unit configured to inspect the article based on the image, where
   the detection elements include:
      first detection elements arranged in a first column in a crossing direction intersecting the transport direction; and
      second detection elements arranged in a second column parallel to the first column, and, as viewed in the transport direction, one of the second detection elements is arranged at a position corresponding to between two adjacent first detection elements in the first detection elements in the first column.

According to this X-ray inspection apparatus, the detection elements included in the sensor unit include: the first detection elements arranged in a first column in a crossing direction intersecting the transport direction; and the second detection elements arranged in a second column parallel to the first column. As viewed in the transport direction, one of the second detection elements is arranged at a position corresponding to between two adjacent first detection elements in the first column. As a result, even without increasing the integration degree of the sensor unit, a foreign matter that has passed over a gap between the adjacent first detection elements will pass over one of the second detection elements. Thus, while the manufacturing cost of the sensor unit is reduced, a foreign matter detection is less likely to be omitted.

### Advantageous Effects of Invention

According to one aspect of the present invention, it is possible to provide an X-ray inspection apparatus capable of preventing detection of a foreign matter from being omitted while reducing the increase in the manufacturing cost.

### Brief Description of Drawings

FIG. 1 is a configuration diagram of an X-ray inspection apparatus according to an embodiment.
FIG. 2 is a schematic configuration diagram of the interior of a shield box illustrated in FIG. 1.
FIG. 3 is a schematic plan view of a main part of a sensor unit.
FIG. 4 is a functional configuration diagram of a control unit.
FIG. 5(a) is a schematic plan view illustrating a first example of a combination of second detection elements. FIG. 5(b) is a schematic plan view illustrating a second example of a combination of second detection elements.
FIG. 6 is a schematic plan view of a main part of a sensor unit according to a modification.

### Description of Embodiments

A preferred embodiment of the present invention will now be described in detail with reference to the attached drawings. In the description of the drawings, the same or equivalent elements are denoted by the same reference signs, and redundant descriptions will be omitted.

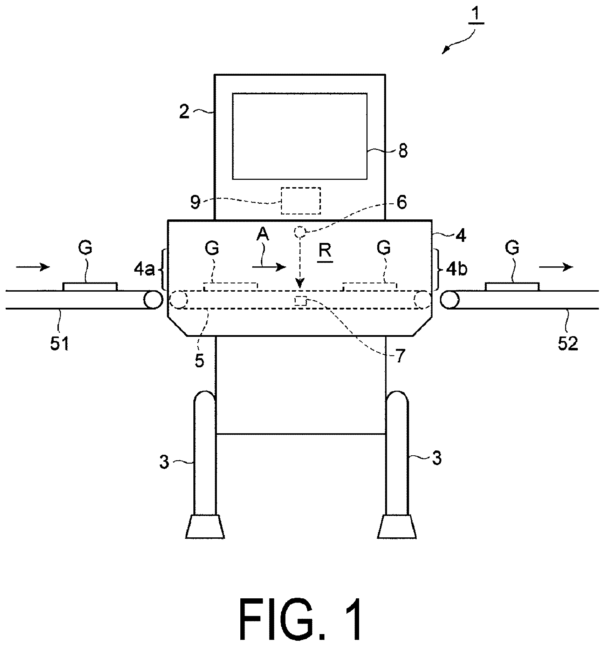

As illustrated in FIG. 1, an X-ray inspection apparatus 1 includes a device main body 2, a support leg 3, a shield box 4, a conveying unit 5, an X-ray irradiation unit 6, a sensor unit 7, a display operation unit 8, and a control unit 9. The X-ray inspection apparatus 1 generates an X-ray transmission image of an article G while conveying the article G, and inspects the article G based on the X-ray transmission image. The article G before inspection is carried into the X-ray inspection apparatus 1 by a carry-in conveyor 51. The article G after inspection is carried out from the X-ray inspection apparatus 1 by a carry-out conveyor 52.

The device main body 2 accommodates the control unit 9 and the like. The support leg 3 supports the device main body 2. The device main body 2 is provided with the shield box 4. The shield box 4 is a housing for preventing leakage of X-rays (electromagnetic waves) to the outside. Inside the shield box 4, an inspection chamber R is provided in which the inspection of the article G by X-rays is performed. The shield box 4 is formed with a carry-in port 4a and a carry-out port 4b. The article G before the inspection is carried into the inspection chamber R from the carry-in conveyor 51 through the carry-in port 4a. The article G after the inspection is conveyed from the inspection chamber R to the carry-out conveyor 52 via the carry-out port 4b.

The conveying unit 5 is a member for conveying the article G and is arranged to pass through the center of the shield box 4. The conveying unit 5 conveys the article G along a transport direction A from the carry-in port 4a to the carry-out port 4b via the inspection chamber R. The speed (conveyance speed) at which the article G is conveyed by the conveying unit 5 is set by the control unit 9, for example. The conveying unit 5 is, for example, a belt conveyor stretched between the carry-in port 4a and the carry-out port 4b. The conveying unit 5 may protrude outward from the carry-in port 4a and the carry-out port 4b.

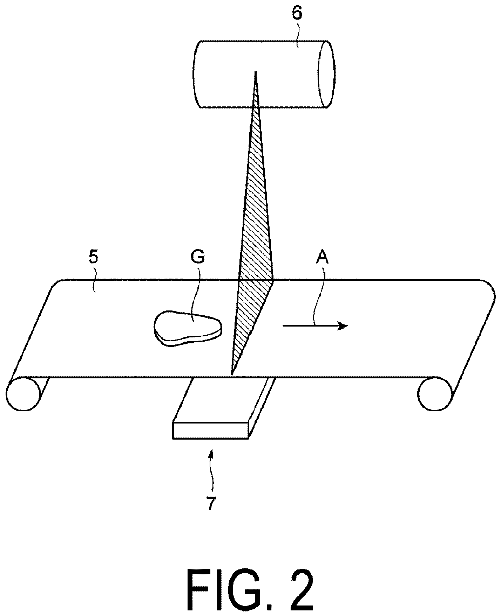

As illustrated in FIGS. 1 and 2, the X-ray irradiation unit 6 is an electromagnetic wave irradiation unit arranged in the shield box 4, and irradiates the article G conveyed by the conveying unit 5 with X-rays. The X-rays include X-rays of various energy regions from low energy (long wavelength) to high energy (short wavelength). Thus, the X-ray irradiation unit 6 irradiates the article G conveyed to the conveying unit 5 with X-rays of a plurality of energy regions. After the activation of the X-ray inspection apparatus 1 and before the inspection of the article G, the X-ray irradiation unit 6 may perform irradiation of X-rays (i.e., idling of the X-ray irradiation unit 6). Note that the above-described "low" and "high" in the low energy and high energy represent "low" and "high" relatively among the plurality of energy regions irradiated from the X-ray irradiation unit 6, and do not represent a specific range. The power (in particular, current) supplied to the X-ray irradiation unit 6 can be changed manually or automatically. By changing the power, the output of the X-ray irradiated to the article G can be changed. Thus, the X-ray having an appropriate intensity for the article G can be irradiated.

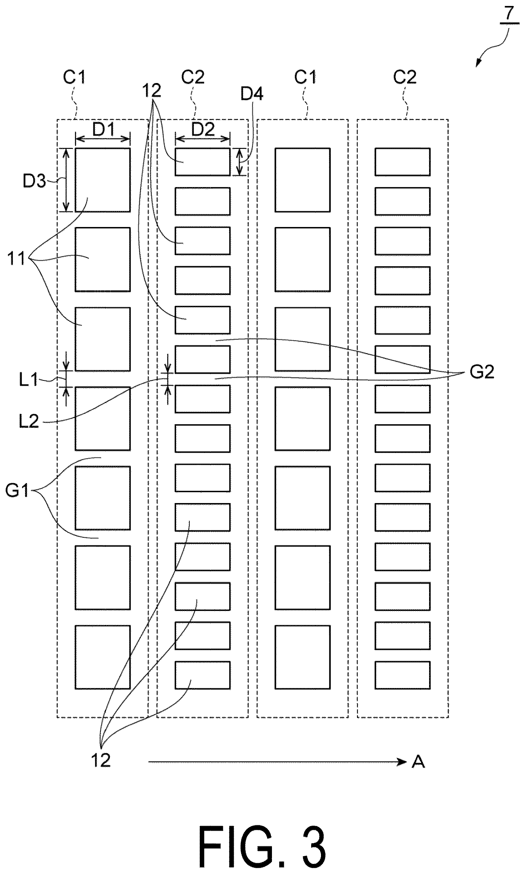

The sensor unit 7 detects the electromagnetic waves. The sensor unit 7 is arranged in the shield box 4 at a position facing the X-ray irradiation unit 6 in the vertical direction. The conveying unit 5 is positioned between the sensor unit 7 and the X-ray irradiation unit 6 in the vertical direction. FIG. 3 is a schematic plan view of a main part of the sensor unit 7. As illustrated in FIG. 3, the sensor unit 7 includes detection elements 10 that detect X-rays and are arranged in a planar (two-dimensional) shape. The detection elements 10 are arranged in a direction (crossing direction) that at least intersects the transport direction A of the conveying unit 5.

In the present embodiment, the sensor unit 7 is a direct conversion type detection unit that can detect X-rays by a photon counting method. The detection element 10 is, for example, a sensor (multi-energy sensor) for detecting X-rays in each of a plurality of energy regions transmitted through the article G, and the sensor unit 7 may be a Time Delay Integration sensor (TDI sensor). The detection element 10 includes, for example, a photon detection type sensor such as a CdTe semiconductor detector. In the detection element 10, for example, an electron-hole pair is generated when an X-ray photon arrives. A counting process of photon (photon counting) is performed based on the energy (photon energy) obtained at this time. The counting process is performed by, for example, a calculation unit (not illustrated) included in the sensor unit 7 or the detection element 10. The result of the counting process (detection result) of each detection element 10 by the calculation unit is output to the control unit 9 at predetermined time intervals, for example. The predetermined time is a time (default time) predetermined by the X-ray inspection apparatus 1. The predetermined time interval described above is also referred to as a read out interval or a delay time, and can be appropriately changed by the control unit 9.

Each detection element 10 of the sensor unit 7 may discriminate the detected photon energy of X-rays into 2 or more energy regions based on any threshold. In this case, the sensor unit 7 can perform photon counting in each energy region. The any threshold is, for example, one or more values (in keV) set by the control unit 9. The any threshold may be set, for example, by the method described in JP 2023-132587 A, or by using a following brightness level.

The detection elements 10 include first detection elements 11 arranged in the first column C1 in the crossing direction, and second detection elements 12 arranged in the second column C2 in parallel to the first column C1. Thus, first detection elements 11 are arranged in the first column C1 along the crossing direction, and second detection elements 12 are arranged in the second column C2 along the crossing direction. In the sensor unit 7, the first column C1 and the second column C2 are arranged alternately with multiple rows each along the transport direction A. In other words, the plurality of first columns C1 and the plurality of second columns C2 are set in the sensor unit 7, and the first column C1 and the second column C2 are arranged alternately in the transport direction A. Thus, the first detection elements 11 and the second detection elements 12 are arranged alternately in the transport direction A. Each of the first column C1 and the second column C2 may function as a pseudo-line sensor, for example.

In the present embodiment, a dimension D1 of the first detection element 11 in the transport direction A is the same as, but is not limited to, a dimension D2 of a second detection element 12 in the transport direction A. A dimension D3 of the first detection element 11 in the crossing direction is different from a dimension D4 of the second detection element 12 in the crossing direction. In the present embodiment, the dimension D3 is greater than the dimension D4. For example, the dimension D3 is a natural number multiple of 2 or more of the dimension D4. When the number of first detection elements 11 in the first column C1 and the number of second detection elements 12 in the second column C2 are the same, the brightness, contrast, or the like of an image generated using the detection result output from the second column C2 may be significantly different from the image generated using the detection result output from the first column C1. Thus, in the present embodiment, the number of second detection elements 12 arranged in the second column C2 is greater than the number of first detection elements 11 arranged in the first column C1. For example, the number of second detection elements 12 arranged in the second column C2 is a natural number multiple of 2 or more of the number of first detection elements 11 arranged in the first column C1. Alternatively, the value obtained by dividing the number of second detection elements 12 arranged in the second column C2 by the number of first detection elements 11 arranged in the first column C1 may be the same as the value obtained by dividing the dimension D3 by the dimension D4.

A dimension L1 of a gap G1 between the first detection elements 11 in the crossing direction may be the same as or different from a dimension L2 of a gap G2 between the second detection elements 12 in the crossing direction. In the present embodiment, the dimension L1 is greater than the dimension L2. In this case, as seen in the transport direction A, a part of the second detection elements 12 overlaps with the gap G1. For example, as viewed in the transport direction A, a part of two adjacent second detection elements 12 overlaps with the gap G1. Thus, the foreign matter, even when passing only over the gap G1, can pass over one or a plurality of the second detection elements 12. Alternatively, even when the dimensions L1 and L2 are the same, a part of the second detection element 12 may overlap with the gap G1 as viewed in the transport direction A. That is, regardless of the relationship between the dimensions L1 and L2, the first detection element 11 may overlap with second detection elements 12 in the transport direction A.

When the X-ray inspection apparatus 1 is activated, sensitivity correction (calibration) of the sensor unit 7 may be performed. In this sensitivity correction, the brightness level is acquired based on the X-rays that have not transmitted through the article G. The brightness level is the number of photon counts detected when the X-rays that have not transmitted through the article G are incident on the sensor unit 7, and corresponds to the intensity of the detection signal included in the detection result. The sensitivity correction of the sensor unit 7 corresponds to the correction of the output difference between the first detection elements 11 and the correction of the output difference between the second detection elements 12. From the viewpoint of shortening the start-up time of the X-ray inspection apparatus 1, in the sensitivity correction, X-ray irradiation by the X-ray irradiation unit 6 may be started simultaneously with the start of X-ray detection by the sensor unit 7. Note that the sensitivity correction of the sensor unit 7 is performed by the method described in JP Application No. 2023-39353, for example. In the present embodiment, from the viewpoint of improving the contrast of the image generated by the X-ray inspection apparatus 1, it is checked whether the highest brightness level obtained during the sensitivity correction is lower than a predetermined threshold. That is, it is checked whether the maximum intensity of the detection signal included in the detection result output from at least some of the detection elements 10 obtained during the sensitivity correction is lower than a predetermined intensity. The result of the check is output to the control unit 9.

As illustrated in FIG. 1, the display operation unit 8 is a member (display unit) provided in the device main body 2. The display operation unit 8 displays various information and receives input operations of various conditions from the outside. The display operation unit 8 is, for example, a liquid crystal display and displays an operation screen as a touch panel. In this case, an operator can input various conditions via the display operation unit 8. For example, the operator can set the conveyance speed of the conveying unit 5, the power (at least one of current and voltage) supplied to the X-ray irradiation unit 6, or the like via the display operation unit 8. The input operation received by the display operation unit 8 is output to the conveying unit 5, the sensor unit 7, the control unit 9, or the like.

The control unit 9 is disposed inside the device main body 2. The control unit 9 controls the operation of each unit of the X-ray inspection apparatus 1. The control unit 9 includes a Central Processing Unit (CPU), a Read Only Memory (ROM), and a Random Access Memory (RAM). The ROM stores a program for controlling the X-ray inspection apparatus 1, an operation mode of the X-ray inspection apparatus 1, or the like.

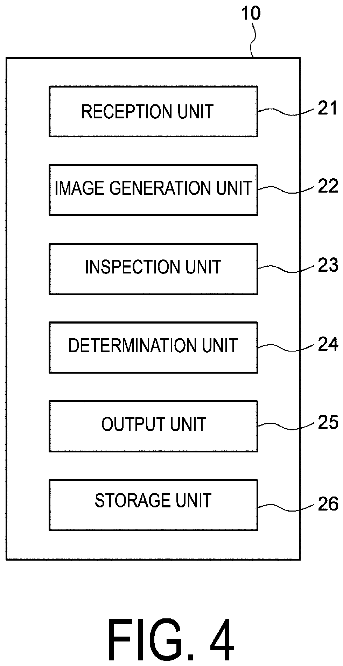

FIG. 4 is a functional configuration diagram of the control unit 9. As illustrated in FIG. 4, the control unit 9 includes a reception unit 21, an image generation unit 22, an inspection unit 23, a determination unit 24, an output unit 25, and a storage unit 26.

The reception unit 21 receives an input operation received by the display operation unit 8. The reception unit 21 receives, for example, the conveyance speed of the conveying unit 5 set via the display operation unit 8. The reception unit 21 receives the detection result (specifically, detection results of X-rays output from each detection element 10) output from the sensor unit 7. The reception unit 21 transmits the received detection results to the image generation unit 22.

The image generation unit 22 is mainly composed of, for example, a Graphics Processing Unit (GPU), and generates an image based on the detection results output from the sensor unit 7. For example, the image generation unit 22 develops signals of the received detection results into a two-dimensional image on a memory. The memory in which the two-dimensional image is developed is, for example, a memory included in the GPU, but is not limited thereto. For example, the image generation unit 22 reads out the detection results output from at least a part of the detection elements 10 included in the sensor unit 7 at a predetermined read-out interval, and generates one or a plurality of time-delay integral images used for inspecting the article G. For example, a plurality of transmission images corresponding to each of the plurality of energy regions are generated by the image generation unit 22. The image generation unit 22 may generate one or a plurality of difference images from the plurality of transmission images.

The image generation unit 22 may use, for example, an image processing algorithm or a program automatically set with machine learning. The image processing algorithm is configured by one image processing filter or a combination of image processing filters. At least one of the image processing algorithms can be automatically generated from the image processing filters based on the specifications, inspection conditions or the like of the X-ray inspection apparatus 1 by employing Genetic Algorithms (GA), which are methods applying the mechanism of heredity and evolution in the biological world. At least some of the image processing algorithms can also be appropriately set by the operator via the display operation unit 8. The program automatically set with machine learning is a predictive model (learned model) generated by machine learning, and an inference program in which parameters (learned parameters) obtained as a result of machine learning are incorporated. Examples of machine learning used in the learned model include neural networks, support vector machines, genetic algorithms or the like.

The image generated by the image generation unit 22 may include an image (first image) generated using the detection results of the first detection elements 11 and an image (second image) generated using the detection results of the second detection elements 12. In this case, the image generation unit 22 generates a first image using the detection results output from each first column C1 of the sensor unit 7, and generates a second image using the detection results output from each second column C2 of the sensor unit 7. One pixel included in the first image (first pixel) is generated, for example, by using the detection result of the first detection element 11 located at a predetermined n-th position in one or a plurality of first columns C1 (n is a natural number). The first detection element 11 located at a predetermined n-th position refers to the first detection element 11 positioned at a predetermined n-th location counted from one end of the first column C1 in the crossing direction. When the detection element 10 is a TDI sensor, the first pixel is generated using the detection result of the first detection element 11 positioned at the predetermined n-th position in each first column C1. One pixel included in the second image (second pixel) is generated, for example, by using the detection results of second detection elements 12 located at predetermined m-th position to (m+k)-th position in one or a plurality of second columns C2 (each of m and k is a natural number). That is, the second pixel is generated by summing the detection results of two or more second detection elements 12 in one or a plurality of second columns C2 and using the summation result. When the detection element 10 is a TDI sensor, the second pixel is generated by using the summation result of the detection results of a plurality of second detection elements 12 in the second detection elements 12 in each second column C2. The image generation unit 22 may generate a difference image from the first image and the second image.

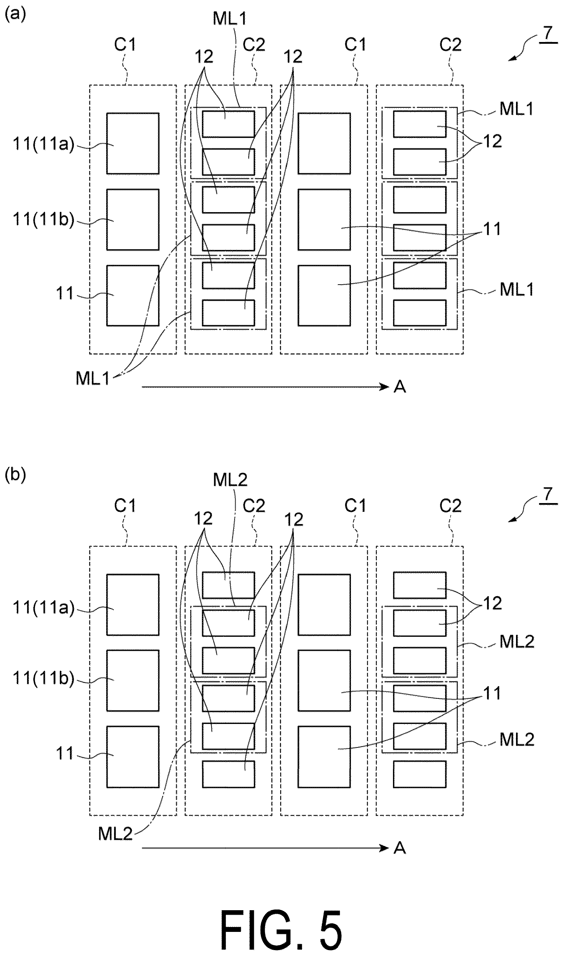

The plurality of second detection elements 12 used for generating the second pixel may be arranged in order with each other. Examples of a combination of second detection elements 12 will be described below with reference to FIGS. 5(a) and 5(b). FIG. 5(a) is a schematic plan view illustrating a first example of a combination of the plurality of second detection elements 12. FIG. 5(b) is a schematic plan view illustrating a second example of a combination of second detection elements 12. As illustrated in FIGS. 5(a) and 5(b), two adjacent predetermined detection elements among the first detection elements 11 arranged in the first column C1 are designated as a third detection element 11a and a fourth detection element 11b, respectively.

As illustrated in FIG. 5(a), in the first example, the second pixel is generated by using the result of the summation of the detection results of the two second detection elements 12 surrounded by a border ML1. Here, both of the two second detection elements 12 surrounded by the border ML1 are arranged in the transport direction A with respect to the third detection element 11a. This makes it less likely for a difference to occur between an image generated using the detection results output from the first column C1 and an image generated using the detection results output from the second column C2.

As illustrated in FIG. 5(b), in the second example, the second pixel is generated using the result of the summation of the detection results of the two second detection elements 12 surrounded by a border ML2. Here, one (a part) of the two second detection elements 12 surrounded by the border ML2 is arranged in the transport direction A with respect to the third detection element 11a. The other (the other part) of the two second detection elements 12 is arranged in the transport direction A with respect to the fourth detection element 11b. This makes it likely for a foreign matter in the article G, which passes over the gap G1 between the first detection elements 11 in the crossing direction, to be indicated by the pixel or image generated using the detection results output from the second column C2.

In the present embodiment, the image generation unit 22 may generate a third image using all of the detection results output from the sensor unit 7, instead of the first image and the second image, or in addition to the first image and the second image. In this case, the third image includes a first pixel and a second pixel, and the image generation unit 22 generates a first pixel using the detection results of the predetermined n-th position of the first detection element 11, and generates a second pixel using the detection results of the predetermined plurality of second detection elements 12. The second pixel may be generated by a combination of the second detection elements 12 illustrated in the first example, or by a combination of the second detection elements 12 illustrated in the second example.

The inspection unit 23 inspects the article G based on the image generated by the image generation unit 22. For example, the inspection unit 23 inspects the article G by using the transmission images, the difference images, or the like. The inspection unit 23 may inspect the article G based on both the difference image and the transmission image. During the generation of the difference image by the image generation unit 22, the inspection of the article G based on the transmission image or the like may be performed. The inspection unit 23, for example, inspects for the article G whether a foreign matter is present or whether a chip/crack is present, but no limitation is intended. In the case where the article G is wrapped in a sheet-like packaging material, the inspection unit 23 can also inspect a break of the packaging material, a seal failure of the packaging material (seal bite), or the like. In the case where the article G is housed in a package, the inspection unit 23 can perform a foreign matter confirmation inspection, a missing part confirmation inspection, a housing number confirmation inspection, a cavity confirmation inspection, or the like, in the package. The inspection unit 23 transmits the inspection result of the article G to the determination unit 24 and the storage unit 26.

The determination unit 24 determines whether the article G is a good article based on the inspection result received from the inspection unit 23. For example, the determination unit 24 determines whether a foreign matter is present in the article G, a chip/crack of the article G, or the like. The determination unit 24 transmits the determination result to the output unit 25 and the storage unit 26.

The output unit 25 outputs the determination result by the determination unit 24 to at least one of unit other than the control unit 9 in the X-ray inspection apparatus 1 and an apparatus different from the X-ray inspection apparatus 1. Accordingly, at least one of the X-ray inspection apparatus 1 and an apparatus different from the X-ray inspection apparatus 1 (e.g., a sorting apparatus located downstream from the X-ray inspection apparatus 1) can perform an operation when the article G is defective. Other examples of the above-mentioned apparatuses different from the X-ray inspection apparatus 1 include, for example, the carry-in conveyor 51, the carry-out conveyor 52, and a notification apparatus.

The storage unit 26 stores signals, data, or the like generated by the control unit 9. For example, the storage unit 26 stores the detection results transmitted from the reception unit 21, the image data transmitted from the image generation unit 22, the data related to the inspection results transmitted from the inspection unit 23, and the data related to the determination results transmitted from the determination unit 24.

In accordance with the X-ray inspection apparatus 1 according to the present embodiment described above, the detection elements 10 of the sensor unit 7 include the first detection elements 11 arranged in the first column C1 in the crossing direction and the second detection elements 12 arranged in the second column C2 parallel to the first column C1. The number of the second detection elements 12 arranged in the second column C2 is greater than the number of the first detection elements 11 arranged in the first column C1. Thus, the second detection element 12 is smaller than the first detection element 11, and a foreign matter passing through the sensor unit 7 is likely to be detected by second detection elements 12 in the second column C2. Thus, a foreign matter detection is less likely to be omitted. In addition, the sensor unit 7 includes both the first detection elements 11 and the second detection elements 12, so that an increase in the manufacturing cost of the sensor unit 7 is reduced as compared with the case where the sensor unit 7 includes only the second detection elements 12. In other words, an increase in the manufacturing cost of the sensor unit 7 is reduced as compared with the case where only second columns C2 are set in the sensor unit 7.

In the present embodiment, the image may include a first pixel and a second pixel, and the image generation unit 22 may generate the first pixel using the detection result of one of the first detection elements 11 and generate the second pixel using the detection results of a plurality of second detection elements 12 in the second detection elements 12. In this case, the contrast of the image generated by the image generation unit 22 can be improved.

In this embodiment, the image may include a first image including the first pixel generated using the detection result of one of the first detection elements 11 and a second image including the second pixel generated using the detection results of a plurality of second detection elements 12 in the second detection elements 12. In this case, the difference between the brightness, contrast, and the like of the first image and those of the second image can be decreased.

In the present embodiment, a part of the plurality of second detection elements 12 used for generating the second pixel may be arranged in the transport direction A with respect to the third detection element 1 1a, and another part of the plurality of second detection elements 12 used for generating the second pixel may be arranged in the transport direction A with respect to the fourth detection element 11b. In this case, the foreign matter that has passed between the third detection element 11a and the fourth detection element 11b is more likely to be displayed in the second pixel generated using the detection results of the second detection elements 12. Thus, a foreign matter detection is more less likely to be omitted.

In the present embodiment, the dimension D1 of the first detection element 11 in the transport direction A may be the same as the dimension D2 of the second detection element 12 in the transport direction A. The dimension D3 of the first detection element 11 in the crossing direction may be a natural number multiple of 2 or more of the dimension D4 of the second detection element 12 in the crossing direction. In this case, a foreign matter passing over the sensor unit 7 is more likely to be detected by second detection elements 12 in the second column C2, so that a foreign matter detection is more less likely to be omitted.

In the present embodiment, the first column C1 and the second column C2 are alternately provided with multiple rows each along the transport direction A. Thus, a foreign matter detection is more less likely to be omitted.

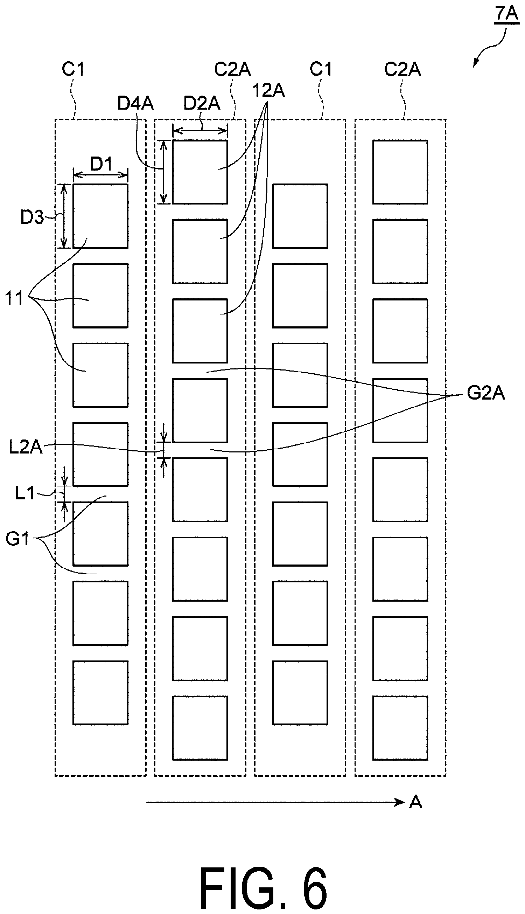

FIG. 6 is a schematic plan view of a main part of a sensor unit 7A according to a modification. As illustrated in FIG. 6, the sensor unit 7A differs from the sensor unit 7 of the above embodiment in that the sensor unit 7A includes a second column C2A instead of the second column C2. The second column C2A includes second detection elements 12A arranged in the crossing direction. A dimension D2A of a second detection element 12A in the transport direction A is the same as, but is not limited to, the dimension D1 of the first detection element 11. In addition, a dimension D4A of the second detection element 12A in the crossing direction is the same as the dimension D3 of the first detection element 11, but no limitation is intended. In the present modification, a dimension L2A of a gap G2A between the second detection elements 12A in the crossing direction is the same as the dimension L1 of the gap G1, but no limitation is intended.

In the present modification, the first detection elements 11 and the second detection elements 12A included in the sensor unit 7A are arranged in a so-called staggered pattern. For example, as viewed in the transport direction A, the second detection element 12A is arranged at a position corresponding to between two adjacent first detection elements 11 in the first column C1. Similarly, as viewed in the transport direction A, the first detection element 11 is arranged at a position corresponding to between two adjacent second detection elements 12A in the second column C2A. In other words, in the transport direction A, the gap G1 between the first detection elements 11 overlaps with one of the second detection elements 12A, and the gap G2A between the second detection elements 12A overlaps with one of the first detection elements 11. In addition, as viewed in the transport direction A, one of the first detection elements 11 in a predetermined one of the first columns C1 overlaps with two of the second detection elements 12A in the second column C2 adjacent to the predetermined first column C1. Similarly, as viewed in the transport direction A, one of the second detection elements 12A in a predetermined one of the second columns C2 overlaps with two of the first detection elements 11 in the first column C1 adjacent to the predetermined second column C2.

According to the above-described modification, the foreign matter that has passed over the gap G1 between adjacent first detection elements 11 passes over any of the second detection elements 12A even without increasing the integration degree of the sensor unit 7A. Thus, it is possible to reduce the increase in the manufacturing cost of the sensor unit 7A and to prevent the detection of a foreign matter from being omitted.

Although the embodiments and modifications of the present invention have been described above, the present invention is not necessarily limited to the above-described embodiments and modifications, and various changes can be made without departing from the scope thereof. For example, in the above-described embodiments, the sensor unit is a device capable of detecting X-rays by a photon counting method, but no limitation is intended. The detection element included in the sensor unit may include at least a scintillator and a photodiode.

In each of the above-described first and second examples of the embodiments, the second pixel is generated using the result of the summation of the detection results of two second detection elements, but the present invention is not limited thereto. For example, the second pixel may be generated using the result of the summation of the detection results of three or more second detection elements. In this case, a part of a plurality of second detection elements used to generate the second pixel may be aligned with the third detection element in the transport direction, and another part of the plurality of second detection elements may be aligned with the fourth detection element in the transport direction.

### Reference Signs List

1 X-ray inspection apparatus; 3 Support leg; 4 Shield box; 4a Carry-in port; 4b Carry-out port; 5 Conveying unit; 6 X-ray irradiation unit; 7 Sensor unit; 8 Display operation unit; 9 Control unit; 10 detection element; 11 First detection element; 11a Third detection element; 11b Fourth detection element; 12 Second detection element; 21 Reception unit; 22 Image generation unit; 23 Inspection unit; 24 Determination unit; 25 Output unit; 26 Storage unit; A Transport direction; G Article

## Claims

1. An X-ray inspection apparatus (1), comprising:
a conveying unit (5) configured to convey an article (G) along a transport direction;
an irradiation unit (6) configured to irradiate the article (G) conveyed by the conveying unit (5) with X-rays;
a sensor unit (7) configured to detect the X-rays and including detection elements (10) arranged in a planar configuration;
an image generation unit (22) configured to generate an image based on a detection result output from the sensor unit (7); and
an inspection unit (23) configured to inspect the article (G) based on the image, wherein
the detection elements (10) include:
first detection elements (11) arranged in a first column in a crossing direction intersecting the transport direction; and
second detection elements (12) arranged in a second column parallel to the first column, and
the number of the second detection elements (12) arranged in the second column is greater than the number of the first detection elements (11) arranged in the first column.

2. The X-ray inspection apparatus (1) according to claim 1, wherein
the image includes a first pixel and a second pixel, and
the image generation unit (22) generates the first pixel using a detection result of one of the first detection elements (11) and generates the second pixel using detection results of a plurality of second detection elements (12) in the second detection elements (12).

3. The X-ray inspection apparatus (1) according to claim 1, wherein
the image includes a first image including a first pixel generated using a detection result of one of the first detection elements (11) and a second image including a second pixel generated using detection results of a plurality of second detection elements (12) in the second detection elements (12).

4. The X-ray inspection apparatus (1) according to claim 2 or 3, wherein
when two adjacent detection elements among the first detection elements (11) arranged in the first column are designated as a third detection element (11a) and a fourth detection element (11b) respectively,
a part of the plurality of second detection elements (12) used for generating the second pixel are arranged in the transport direction with respect to the third detection element (11a), and
another part of the plurality of second detection elements (12) used for generating the second pixel are arranged in the transport direction with respect to the fourth detection element (11b).

5. The X-ray inspection apparatus (1) according to any one of claims 1 to 3, wherein
a dimension of the first detection element (11) in the transport direction is the same as a dimension of the second detection element (12) in the transport direction, and
a dimension of the first detection element (11) in the crossing direction is a natural number multiple of 2 or more of a dimension of the second detection element (12) in the crossing direction.

6. The X-ray inspection apparatus (1) according to any one of claims 1 to 3, wherein
the first column and the second column are alternately provided with multiple rows along the transport direction.

7. An X-ray inspection apparatus (1), comprising:
a conveying unit (5) configured to convey an article (G) along a transport direction;
an irradiation unit (6) configured to irradiate the article (G) conveyed by the conveying unit (5) with X-rays;
a sensor unit (7) configured to detect the X-rays and including detection elements (10) arranged in a planar configuration;
an image generation unit (22) configured to generate an image based on a detection result output from the sensor unit (7); and
an inspection unit (23) configured to inspect the article (G) based on the image, wherein
the detection elements (10) include:
first detection elements (11) arranged in a first column in a crossing direction intersecting the transport direction; and
second detection elements (12) arranged in a second column parallel to the first column, and
as viewed in the transport direction, one of the second detection elements (12) is arranged at a position corresponding to between two adjacent first detection elements (11) in the first detection elements (11) in the first column.
